# EUROPEAN PATENT SPECIFICATION

(11) **EP 4 249 290 B1**
(45) Date of publication and mention of the grant of the patent: **17.09.2025**
(21) Application number: 21894361.1
(22) Date of filing: 08.10.2021
(51) Int. Cl.: B60C 11/00, B60C 11/03

(54) **TIRE**
REIFEN
PNEUMATIQUE

(30) Priority: 20.11.2020 JP 2020193125
(43) Date of publication of application: 27.09.2023
(73) Proprietor: BRIDGESTONE CORPORATION, Chuo-ku Tokyo 104-8340 (JP)
(72) Inventor: ISHIHARA Nobuyuki, Tokyo 104-8340 (JP)
(74) Representative: Marks & Clerk LLP
(86) International application number: PCT/JP2021/037343
(87) International publication number: WO 2022/107487

(56) References cited:
- WO-A1-2019/176445
- JP-A- 2000 238 505
- JP-A- 2001 010 308
- JP-A- 2007 069 665
- JP-A- 2014 184 808
- JP-A- 2016 060 375
- JP-A- 2019 188 853
- US-A1- 2017 001 476

## Description

### TECHNICAL FIELD

The present invention relates to tires, and more particularly to a tire capable of suppressing uneven wear on a shoulder side of the tire and improving a life of the tire.

### BACKGROURND

In order to suppress the uneven wear occurring in the tire and to improve balance of various performances, there has been proposed a structure in which multiple rubber materials are divided in a width direction to form a tread section (for example, Patent Document 1).

### CITATION DOCUMENT

### Patent Document

Patent Document 1: Japanese Unexamined Patent Application Publication No. 2012-116246.

Other relevant prior art is known from JP2000238505 A which discloses a pneumatic tire comprising a tread portion configured by a nonconductive rubber and conductive rubber, both extending in a tire circumferential direction and exposing themselves to a tread surface of the outer periphery. An exposing interface point between the nonconductive rubber and conductive rubber is established on a side wall face of a main groove which is a longitudinal groove extending in a tire circumferential direction on the tread surface.

Other tires with different tread rubbers are known from WO 2019/176445 A1, JP 2007 069665 A, JP 2014 184808 A, JP 2019 188853 A, JP 2016 060375 A, JP 2001 010308 A and US 2017/001476 A1.

### SUMMARY OF THE INVENTION

### Technical Problem

According to the technology disclosed in Patent Document 1, although the uneven wear can be suppressed, because the boundary of multiple rubbers forming the tread section is in a vertical direction with respect to the tread surface, there had been a case where cracks occur at the boundary between the rubbers due to strain concentration during rolling of the tire.

The present invention has been made in view of the above-mentioned problem and aims at providing a pneumatic tire capable of suppressing, in a structure where the tread section is formed by multiple rubbers, cracks in the rubbers at the boundary where the rubbers are joined together.

### Solution to Problem

According to the present invention, as a configuration of a tire for solving the above-mentioned problem, there is a tire according to claim 1.

Preferred features are defined by the dependent claim.

### BRIEF DESCRIPTION OF DRAWINGS

Fig. 1 is a block diagram of a tire.
Fig. 2 is an enlarged view of a tread section.
Fig. 3 is an enlarged view of an intermediate land portion.

Hereinafter, the present invention will be explained in detail through embodiments, however, the embodiments described below do not limit the inventions set forth in the claims, and all of combinations of the features described in the embodiments are not necessarily essential to the solving means of the invention.

### DESCRIPTION OF EMBODIMENTS

### [Basic structure of the tire]

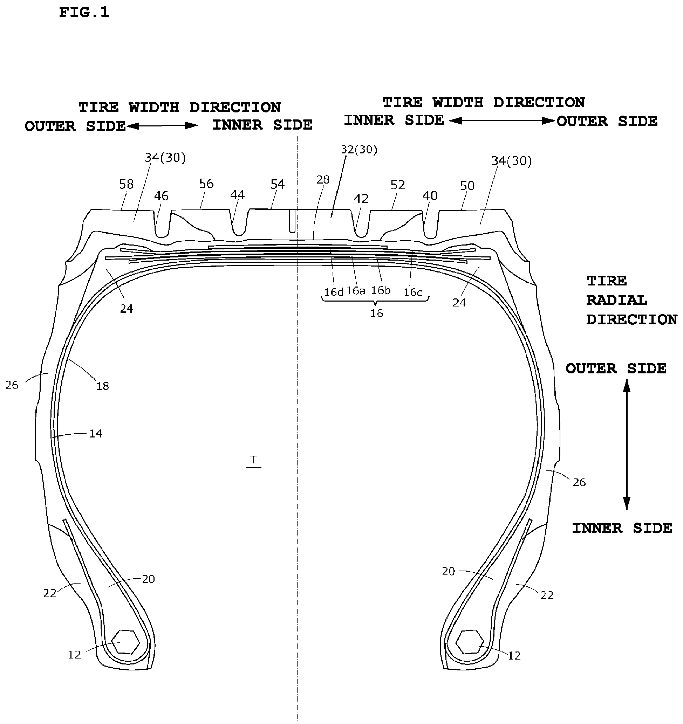

Fig. 1 is a cross-sectional view in the width direction of a tire T according to an embodiment. In the following description, directions indicated by the arrows in Fig. 1 are specified as the tire width direction and the tire radial direction. Further, with respect to the tire width direction, it is defined as right and left centered on the tire center CL when seen toward the face of the paper, and each of the sides of the right and left areas on the tire center CL side may be referred to as an inner side and the opposite side thereof may be referred to as an outer side.

The tire T is provided with bead cores 12, a carcass 14, and a belt 16 (belt layer), all of which are formed mainly of cord members, and an inner liner 18, a bead filler 20, a rim cushion rubber 22, a belt under rubber 24, a side rubber 26, a base rubber 28 and a tread rubber 30 and so on, all of which are formed mainly of rubber materials. The bead core 12, the carcass 14 and the belt 16 form a framework of the tire T. The bead filler 20, the rim cushion rubber 22, the inner liner 18, the belt under rubber 24, the side rubber 26, the base rubber 28 and the tread rubber 30 are provided, as fleshing members for the framework, to satisfy the performance required for each portion of the tire.

The bead core 12 is provided in pairs on the right and left sides of the tire T. The bead core 12 is formed in a ring shape by winding for a predetermined number a bead cord which is formed by layer twisting or multiple twisting steel strands, for example. A contour shape of the bead core 12 is formed, for example, in a polygonal shape such as a square or hexagon, or a circle or the like.

The carcass 14 is provided in such a manner as to be wound up from the inner side to the outer side of the bead cores 12 each provided on the right and left sides and extended toroidally between the right and left bead cores 12; 12. There are three cases of how the end portion of the wound-up carcass 14 terminates, namely a case where end portion of the wound-up carcass 14 terminates at more inner side in the tire radial direction than the maximum width portion of the tire T; a case where the end portion of the wound-up carcass 14 terminates on an outer side in the tire radial direction; and a case where the end portion of the wound-up carcass 14 terminates to be coincided with the maximum width portion of the tire T.

The belt 16 is provided at a crown portion of the carcass 14, that is, at a position corresponding to the tread section of the tire T. The belt 16 is wound along the tire circumferential direction. The belt 16 is, for example, configured by stacking one or more belt plies (in this embodiment, four belt plies 16a to 16d), and a belt cord forming each belt ply extends in the tire circumferential direction.

The bead filler 20 is disposed so as to fill a space formed between the carcass 14 wound up to the bead core 12.

### [Rubber configuration of the tire]

The rim cushion rubber 22 extends a predetermined length along the outer side of the carcass 14 wound up from the innermost side of the carcass 14 in tire radius direction. With this configuration, the adhesiveness with an applied rim when the tire T is assembled to the applied rim is protected, and also the structure of the bead portion is protected.

The belt under rubber 24 is provided between the end portion side of the belt 16 protruding in the tire width direction and the carcass 14 to protect the structure of the end portion side of the belt 16.

The side rubber 26 is adjacent to the rim cushion rubber 22, extends toward the outer side in the radial direction along the outer circumference of the carcass 14, and covers the side portions of the belt under-rubber 24.

The base rubber 28 is provided so as to extend in the tire width direction at the outer side in the tire radial direction of the belt 16, and cover the right and left belt under rubbers 24; 24 and the side rubbers 26; 26.

The tread rubber 30 is provided to be stacked on the outer side in the tire radial direction of base rubber 28 and constitutes, together with the base rubber 28, the tread section of tire T. The tread rubber 30 is formed with a predetermined tread pattern and the surface thereof serves as the ground contact surface of the tire T.

The inner liner 18 extends between the rim cushion rubbers 22; 22 provided in the right and left bead portions and covers the entire inner circumference of the carcass 14. By the inner liner 18, airtightness as the pneumatic tire is imparted.

### [Structure of the tread section]

As illustrated in Fig. 1, the tread rubber 30 according to this embodiment is provided with a plurality (four in this embodiment) of main grooves 40; 42; 44; 46 (hereinafter sometimes referred to as "main grooves 40-46") extending in the tire circumferential direction and a plurality of land portions 50; 52; 54; 56; 58 (hereinafter sometimes referred to as "land portions 50-58").

The main grooves 40-46 are recesses in which a wear indicator, which indicates a use limit of the tire T, is set, and are the deepest recesses among the recesses formed in the tire T. In the following description, among the main grooves 40 to 46, the main grooves 40;46 located on the outermost side in the tire width direction are referred to as outermost grooves 40; 46, and the main grooves 42; 4 4 located on the inner side are referred to as inner grooves 42; 44. Furthermore, among the land portions 50-58, the land portions 50:58 located on the outermost side in the tire width direction are referred to as shoulder land portions 50; 58, and the land portion 54 located in the range including the tire center CL is referred to as the center land portion 54. In addition, the land portions 52;56 located between the shoulder land portion 50 and the center land portion 54 and between the shoulder land portion 58 and the center land portion 54 are referred to as intermediate land portions 52; 56, respectively.

The tread rubber 30 having the above-mentioned tread pattern is configured by a first rubber layer 32 located on the inner side in the tire width direction, and second rubber layers 34; 34, which are in contact with the first rubber layer 32 and located on the outer side in tire width direction of the first rubber layer 32. For the first rubber layer 32 and the second rubber layer 34, rubbers having properties mutually different from each other are applied. For example, for the second rubber layer 34, rubber having a wear resistance superior than that of the first rubber layer 32 is applied, thus uneven wear, which tends to occur on the shoulder portion of the tire T during vehicle turning and the like, can be suppressed.

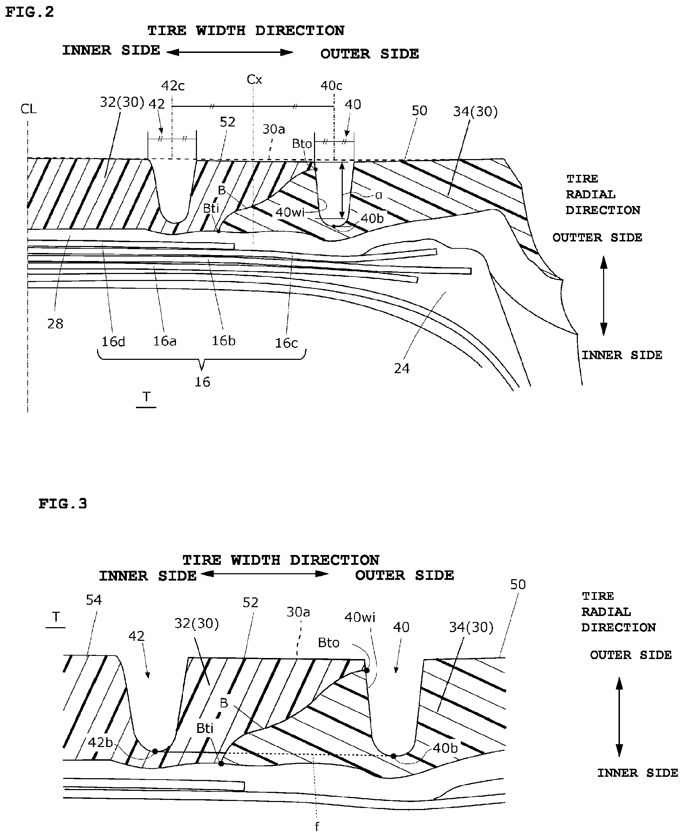

Hereinafter, an explanation will be given as to a relationship between the first rubber layer 32 and the second rubber layer 34 by mainly referring to Fig. 2. However, in the tire T according to this embodiment, because the tread pattern formed on the tread rubber 30 is symmetrical in the right and left directions with the tire center CL between (that is, the tire being not restricted in the direction of rotation), details will be explained using the right side portion from the tire center C.

### [About the boundary]

Fig. 2 is an enlarged cross-sectional view of the tread section. As illustrated in the figure, in the cross-sectional view in the width direction, a boundary B (boundary surface) between the first rubber layer 32 and the second rubber layer 34 extends to be inclined relative to the tire radial direction. More specifically, the boundary B extends to be inclined relative to the tire radial direction and the tire width direction.

### [About the outer end portion of the boundary]

As shown in Fig. 2, an end portion Bto, on the outer side in the tire width direction, of the boundary B reaches and terminates at a groove wall 40w on the inner side in the tire width direction of the outermost groove 40. As the end portion Bto terminates at the groove wall 40wi on the inner side in the tire width direction of the outermost groove 40, the shoulder land portion 50, which is located on the outer side in the width direction of the outermost groove 40, is formed only by the second rubber layer 34. On the other hand, the intermediate land portion 52 is formed by two types of the first rubber layer 32 and the second rubber layer 34. Furthermore, since the boundary B is inclined, the first rubber layer 32 and the second rubber layer 34 are in contact with each other at the intermediate land portion 52 to be in a stacked state in the tire radial direction.

As such, by making the boundary B, at which the first rubber layer 32 and the second rubber layer 34 contact with each other and joined together, incline and by making the end portion Bto on the outer side in the tire width direction of the boundary B terminate at the inner groove wall 40wi of the outermost groove 40, stress caused by friction with the road surface during rolling of the tire is dispersed, and strain concentration against the boundary B is made difficult to occur. Hence, cracking between the first rubber layer 32 and the second rubber layer 34 with the boundary B as the base point can be suppressed.

As shown by the arrow α in Fig. 2, it is preferable to set the termination position of the termination portion Bto of the boundary B on the groove wall 40wi to be in a range from 0% to 90% of a distance from a tread ground contact surface 30a to a groove bottom 40b of the outermost groove 40. In this manner, by setting the termination position of the end portion Bto of the boundary B at the groove wall 40wi to a position where at least the groove bottom 40b is not included, and taking a redetermined distance relative to the groove bottom 40b, cracking at the groove bottom portion (groove bottom 40b) caused due to strain concentration can be suppressed. Incidentally, the roove bottom 40b refers to the deepest position of the outermost groove 40 from the tread ground contact surface 30a. Furthermore, the position of 0% corresponds to a position where the groove wall 40wi and the tread ground contact surface 30a intersect with each other.

### [About the inner end portion of the boundary]

An end portion Bti on the inner side in the tire width direction of the boundary B terminates on the inner side in the tire width direction that is inner than a center Cx in the width direction between the outermost groove 40 and the inner groove 42 adjacent to the inner side in the tire width direction of the outermost groove 40. Incidentally, the end portion Bti reaches to a stacking boundary surface between the base rubber 28 and the tread rubber 30, thus it can also be said that the first rubber layer 32 and the second rubber layer 34 are demarcated with each other in the width direction by the boundary B and stacked with each other. Further, since the end portion Bti terminates at the inner side in the tire width direction that is inner than the center Cx in the width direction, the boundary B as a whole extends to be inclined to the outer side in the radial direction, from the inner side toward the outer side in the tire width direction. Furthermore, it can be said that the boundary B has a length longer than half of the width direction dimension of the intermediate land portion 52 including the boundary B. Here, as illustrated in Fig. 2, the center Cx in the width direction coincides with a center of a width direction distance between a groove center portion 40c of the outermost groove 40 and a groove center portion 42c of the inner side groove 42. In addition, the groove center portions 40c; 42c each coincides with a center of a line segment connecting opening ends opening to the tread ground contact surface 30a.

By setting the termination position of the end portion Bti of the boundary B to be in the range described above, the entire tread rubber 30 gradually wears along with the use of the tire T, and the second rubber layer 34 is newly exposed as the tread surface layer, that is, as the tread ground contact surface. Therefore, it is possible to make the performance of the second rubber layer 34 gradually exhibit at the tread end side. More specifically, by using, as the second rubber layer 34, the rubber which has the wear resistance superior than that of the first rubber layer 32, the second rubber layer 34 is gradually exposed in the region (shoulder region) on the tread end side where uneven wear is likely to occur in the tire width direction, and the region of the second rubber layer 34 having the superior wear resistance increases, thus the uneven wear can be suppressed efficiently.

### [About another preferable example]

The above-mentioned termination position of the end portion Bto of the boundary B at the groove wall 40wi may be set in a range from 0% to 50% of the distance from the tread ground contact surface 30a to the groove bottom 40b. In other words, by terminating at a position, shallow from the tread surface, of the outermost groove 40, the second rubber layer 34 in the range of the intermediate land portion 52 appears, as the tread surface portion, from the early wear stage of the tread section in the use of the tire. Therefore, by employing the rubber excellent in the abrasion resistance as the second rubber layer 34, the speed of wear at the tread end side becomes gradually slower, hence the uneven wear can be suppressed from the early wear stage of the tread section.

In addition, the termination position at the groove wall 40wi of the end portion Bto of the boundary B may be set in a range from 0% to 30% of the distance from the tread ground contact surface 30a to the groove bottom 40b. When set in this range, the second rubber layer 34 within the region of the intermediate land portion 52 appears as the tread surface layer portion from the earlier wear stage in comparison with the example described above, and thus the uneven wear in the tread section can be suppressed from the early wear stage.

Furthermore, the termination position at the groove wall 40wi of the end portion Bto of the boundary B may be set in a range from 30% to 50% of the distance from the tread ground contact surface 30a to the groove bottom 40b. In this case, the second rubber layer 34 in the range of the intermediate land portion 52 appears as the tread surface layer portion from a stage (delayed in time) in which the wear has progressed for a certain degree in comparison with each example described above. Therefore, in the early stage of wear of the tread section, the uneven wear at the tread end side can be suppressed after the performance of the first rubber layer 32 was dominantly exhibited for a certain period of time.

According to the present invention, the loss tangent tanδ at 60°C of the rubber composition forming the second rubber layer 34 is larger than the loss tangent tanδ at 60°C of the rubber composition forming the first rubber layer 32. That is, it is necessary to select materials, as the rubber materials forming the first rubber layers 32 and the second rubber layer 34, so as to satisfy a relationship of the tanδ at 60°C which is, the material forming the first rubber layer 32 the material forming the second rubber layer 34.

With this, the wear at the tread end side becomes slow, thus the uneven wear can be suppressed. Incidentally, the tanδ is calculated on the basis of JIS K6254 and JIS K6394 using results obtained from tests performed in accordance with K6250 with the use of a testing machine which is in compliant with JIS K6272.

As the rubber compositions forming the first rubber layer 32 and the second rubber layer 34, it is preferable to select materials so that a complex modulus of elasticity of the rubber composition forming the first rubber layer 32 becomes greater than a complex modulus of elasticity of the rubber composition forming the second rubber layer 34.

That is, it is preferable to select the materials so as to satisfy a relationship which is, the complex modulus of elasticity of the material forming the first rubber layer 32 > the complex modulus of elasticity of the material forming the second rubber layer 34. By setting characteristics of the materials of the first rubber layer 32 and that of the second rubber layer 34 to the relationship as described above, the wear at the tread end side becomes slow, and thus the uneven wear can be suppressed.

### [About the rubber ratio]

Fig. 3 is an enlarged view of the intermediate land portion 52 having the boundary B. As illustrated in the same figure, it is preferable to set that, in the intermediate land portion 52 having the boundary B between the first rubber layer 32 and the second rubber layer 34, the first rubber layer 32 and the second rubber layer 34 have a relationship in which the first rubber layer 32 is, for example, 10% or more, 35% or more, 50% or more, or 65% or more and so on, in an area ratio in the cross-sectional view in the tire width direction.

As illustrated in Fig. 3, the area ratio refers to a ratio of area of the first rubber layer 32 and the second tubber layer 34 in an area enclosed by a line segment f connecting the groove bottom 40b of the outermost groove 40 and the groove bottom 42b of the inner side groove 42 adjacent to the outermost groove 40, and an outline shape of the intermediate land portion 52.

By setting the ratio of the rubber composition of the first rubber layer 32 included in the intermediate land portion 52 to the above-mentioned range, even in a case where the boundary B is curved in the intermediate land portion 52 during the tire molding process, it is possible to gradually and appropriately expose the second rubber layer 34 as the tread surface layer portion depending on the use of the tire. In particular, rapid change in performance due to sudden exposure of the second rubber layer 34 can be prevented from early stage in use. In addition, by intentionally controlling the curvature during tire molding, it is possible to intentionally achieve the performance change at any stage of use.

Further, as the upper limit of the ratio of area of the rubber composition of the first rubber layer 32, it is preferable to set to 95% or less, more preferably 85% or less. By setting such upper limit value, even in a case where the boundary B is curved in the intermediate land portion 52 during molding, it is possible to suppress the stress concentration due to that the boundary B approaches the vertical.

The present invention has been described through the embodiments; however, the present invention is not limited to the above-described embodiments at all. For example, in the above-described embodiments, the tire T was provided with four main grooves 40; 42; 44; 46 in the tread rubber 30, but the tire may be such a tire that is provided with three main grooves, namely, a main groove formed in the vicinity of the center including the tire center CL and two main grooves one of which being formed on the right tread end side and the other one of which being formed on the left tread end side, or may be such a tire that is provided with five or more main grooves.

In the above-described embodiments, the tire T was structured such that, in the tread section of the tire T, the tread rubber 30 is stacked on the base rubber 28. However, the base rubber 28 is not essential, and the tread rubber 30 may be stacked on the belt 16. In this case, the inner end portion Bti of the boundary B, at which the first rubber layer 32 and the second rubber layer 34 are joined, is to be located on the boundary surface when the tread rubber 30 is stacked on the belt 16.

Furthermore, in the above-described embodiments, the second rubber layer 34 was formed by disposing two types of the first rubber layer 32 and the second rubber layer 34 in the tire width direction. However, the tread rubber 30 may be formed by three or more types of rubber compositions. For example, if five main grooves are formed in the tread rubber, the tread rubber is demarcated into six land portions by each of the main grooves. Then, it is possible, for example, to set a boundary between the first and second types of rubber compositions on the land portion being second from the outer side in the tire width direction, and a boundary between the second and third types of rubber compositions on the land portion being third from the outer side in the tire width direction.

The present invention may also be described as follows. Namely, the tire of the present invention is a tire provided with a tread having a plurality of main grooves extending in a tire circumferential direction and a plurality of land portions demarcated by the main grooves, in which the tread includes: a first rubber layer located on an inner side in a tire width direction and a second rubber layer which is in contact with the first rubber layer and located on an outer side in the tire width direction of the first rubber layer, and in which, in a cross-sectional view in the width direction, a boundary between the first rubber layer and the second rubber layer is inclined relative to a tire radial direction, and one end portion of the boundary terminates at a groove wall on the inner side in the tire width direction of the main grooves.

One end of the boundary may terminate in a range from 0% to 90% of a distance from a tread ground contact surface to a groove bottom of the main groove.

The other end of the boundary may terminate on an inner side in the width direction that is inner than a width direction center between the main groove where the one end terminates and a main groove adjacent to the inner side in the tire width direction of that main groove.

A tanδ at 60°C of rubber compositions forming each of the first rubber layer and the second rubber layer may satisfy a relationship which is, the rubber composition forming the first rubber layer < the rubber composition forming the second rubber layer.

As described above, according to the present invention, cracking in the rubber layers due to strain concentration at the boundary can be suppressed effectively.

In addition, by making the outer end portion in the tire width direction of the boundary terminate in the range from 0% to 90% of the distance from the tread ground contact surface to the groove bottom of the main groove, cracking in the rubber layers due to the strain concentration at the groove bottom can be suppressed effectively.

In addition, by making the other end portion of the boundary terminate on the inner side in the width direction that is inner than the width direction center between the main groove where the one end terminates and the main groove adjacent to the inner side in the tire width direction of the main groove, the range of the second rubber layer gradually expands due to the wear in the entire tread. Thus, progress of the wear on the tread end side can be made slow to thereby suppress the uneven wear.

In addition, by making the tanδ at 60°C of the rubber compositions respectively forming the first rubber layer and the second rubber layer satisfy the relationship which is, the rubber composition forming the first rubber layer < the rubber composition forming the second rubber layer, the wear on the tread end side can be made slower and thus the uneven wear can be suppressed more effectively.

### REFERENCE SIGN LIST

28: Base rubber, 30: Tread rubber, 32: First rubber layer, 34: Second rubber layer, 40: 42: 44: 46; Main grooves, 50: 52: 54: 56: 58: Land portions, B: Boundary, Bto: Bti: End portions, 40wi: Groove wall, CL: Tire center, T: Tire.

## Claims

1. A pneumatic tire (T) provided with a tread having:
a plurality of main grooves (40, 42, 44, 46) extending in a tire circumferential direction; and
a plurality of land portions (50, 52, 54, 56, 58) demarcated by the main grooves (40, 42, 44, 46),
wherein, the tread includes:
a first rubber layer (32) located on an inner side in a tire width direction, and
a second rubber layer (34) which is in contact with the first rubber layer (32) and located on an outer side in the width direction of the first rubber layer (32), and wherein,
in a cross-sectional view in the width direction, a boundary (B) between the first rubber layer (32) and the second rubber layer (34) is inclined relative to a tire radial direction, and one end portion (Bto) of the boundary (B) terminates at a groove wall (40wi) on the inner side in the tire width direction of the main groove (40),
wherein the other end portion (Bti) of the boundary (B) terminates at an inner side in the width direction that is inner than a width direction center (Cx) between the main groove (40) where the one end portion (Bto) of the boundary (B) terminates and a main groove (42) adjacent to the inner side in the tire width direction of the main groove (40), and
wherein a tanδ at 60°C of rubber compositions forming each of the first rubber layer (32) and the second rubber layer (34) satisfies a relationship which is, tanδ of the rubber composition forming the first rubber layer (32) < tanδ of the rubber composition forming the second rubber layer (34).

2. The tire (T) according to claim 1, wherein the one end portion (Bto) of the boundary (B) terminates in a range from 0% to 90% of a distance from a tread ground contact surface (30a) to a groove bottom (40b) of the main groove (40).

## Patentansprüche

1. Luftreifen (T) mit einer Lauffläche versehen, die Folgendes aufweist:
eine Vielzahl von Hauptrillen (40, 42, 44, 46), die sich in einer Reifenumfangsrichtung erstrecken; und
eine Vielzahl von Stegabschnitten (50, 52, 54, 56, 58), die durch die Hauptrillen (40, 42, 44, 46) abgegrenzt sind,
wobei die Lauffläche Folgendes einschließt:
eine erste Gummischicht (32), die sich auf einer Innenseite in einer Reifenbreitenrichtung befindet, und
eine zweite Gummischicht (34), die mit der ersten Gummischicht (32) in Kontakt ist und sich auf einer Außenseite in der Breitenrichtung der ersten Gummischicht (32) befindet, und wobei
in einer Querschnittsansicht in der Breitenrichtung eine Begrenzung (B) zwischen der ersten Gummischicht (32) und der zweiten Gummischicht (34) relativ zu einer radialen Reifenrichtung geneigt ist, und ein Endabschnitt (Bto) der Begrenzung (B) an einer Rillenwand (40wi) auf der Innenseite in der Reifenbreitenrichtung der Hauptrille (40) endet,
wobei der andere Endabschnitt (Bti) der Begrenzung (B) auf einer Innenseite in der Breitenrichtung endet, die weiter innen liegt als eine Breitenrichtungsmitte (Cx) zwischen der Hauptrille (40), wo der eine Endabschnitt (Bto) der Begrenzung (B) endet, und einer Hauptrille (42), die an die Innenseite in der Reifenbreitenrichtung der Hauptrille (40) angrenzt, und
wobei bei 60°C ein tanδ von Gummizusammensetzungen, die jede von der ersten Gummischicht (32) und der zweiten Gummischicht (34) bilden, eine Beziehung erfüllt, die wie folgt lautet: tanδ der Gummizusammensetzung, die die erste Gummischicht (32) bildet, < tanδ der Gummizusammensetzung, die die zweite Gummischicht (34) bildet.

2. Reifen (T) nach Anspruch 1, wobei der eine Endabschnitt (Bto) der Begrenzung (B) in einem Bereich von 0 % bis 90 % eines Abstands von einer Laufflächenbodenkontaktfläche (30a) zu einem Rillenboden (40b) der Hauptrille (40) endet.

## Revendications

1. Pneumatique (T) muni d'une bande de roulement ayant :
une pluralité de rainures principales (40, 42, 44, 46) s'étendant dans une direction circonférentielle du pneu ; et
une pluralité de parties d'appui (50, 52, 54, 56, 58) délimitées par les rainures principales (40, 42, 44, 46),
dans lequel, la bande de roulement inclut :
une première couche de caoutchouc (32) située sur un côté intérieur dans le sens de la largeur du pneu, et
une deuxième couche de caoutchouc (34) qui est en contact avec la première couche de caoutchouc (32) et située sur un côté extérieur dans le sens de la largeur de la première couche de caoutchouc (32), et dans lequel,
dans une vue en coupe transversale dans le sens de la largeur, une limite (B) entre la première couche de caoutchouc (32) et la deuxième couche de caoutchouc (34) est inclinée par rapport à la direction radiale du pneu, et une partie d'extrémité (Bto) de la limite (B) se termine à une paroi de rainure (40wi) sur le côté intérieur dans le sens de la largeur du pneu de la rainure principale (40),
dans lequel l'autre partie d'extrémité (Bti) de la limite (B) se termine sur un côté intérieur dans le sens de la largeur qui est plus à intérieur qu'un centre de direction de la largeur (Cx) entre la rainure principale (40) où ladite une partie d'extrémité (Bto) de la limite (B) se termine et une rainure principale (42) adjacente au côté intérieur dans le sens de la largeur du pneu de la rainure principale (40), et
dans lequel un tanδ à 60 °C de compositions de caoutchouc formant chacune de la première couche de caoutchouc (32) et de la deuxième couche de caoutchouc (34) satisfait une relation qui est tanδ de la composition de caoutchouc formant la première couche de caoutchouc (32) < tanδ de la composition de caoutchouc formant la deuxième couche de caoutchouc (34).

2. Pneumatique (T) selon la revendication 1, dans lequel ladite une partie d'extrémité (Bto) de la limite (B) se termine dans une plage allant de 0 % à 90 % d'une distance entre une surface de contact avec le sol de la bande de roulement (30a) et un fond de rainure (40b) de la rainure principale (40).
